# EUROPEAN PATENT APPLICATION

(11) **EP 4 475 084 A1**
(43) Date of publication of application: **11.12.2024**
(21) Application number: 23747135.4
(22) Date of filing: 30.01.2023
(51) Int. Cl.: G06T 19/00, A63F 13/525

(54) **PROGRAM, METHOD, AND INFORMATION PROCESSING DEVICE**

(30) Priority: 31.01.2022 JP 2022013366
(71) Applicant: COLOPL, INC., Tokyo 107-0052 (JP)
(72) Inventor: SAWAKI, Kazuaki, Tokyo 107-0052 (JP)
(74) Representative: Gille Hrabal Partnerschaftsgesellschaft mbB Patentanwälte
(86) International application number: PCT/JP2023/002808
(87) International publication number: WO 2023/145925

(57) **Abstract**

Provided is a program executed by a computer including a processor and a memory. The program causes the processor to perform operations including generating a virtual space 501; placing a virtual camera and a user object 502 in the virtual space 501; generating a virtual space image based on the virtual camera; and moving, based on a movement operation being performed, the user object 502 in the virtual space. In the generating the virtual space image, when the movement operation is not performed the user object 502 is set as transparent and when the movement operation is performed the user object 502 is set as opaque.

## Description

### TECHNICAL FIELD

The present disclosure relates to a storage medium, a method, and an information processing apparatus.

### BACKGROUND ART

There is known a technique of moving a user object in a virtual space based on an operation input of a user and generating a virtual space image based on a virtual camera which moves in accordance with the movement of the user object.

Patent Document 1 discloses a game program for updating a level of transparency of an obstacle so as to gradually raise the level of transparency of the obstacle when a distance between a virtual camera and the obstacle is less or equal to a predetermined distance in order to prevent the user object from becoming invisible in the virtual space by being hidden behind the obstacle. Patent Document 2 discloses an image drawing device in which, in a virtual space, an enemy character which fights a battle against a user object appears by fading in and disappears by fading out when the enemy character becomes inoperative in the battle due to a decrease of a remaining damage value to zero.

### Prior Art Documents

### Patent Documents

Patent Document 1: Japanese Patent Application Publication No. 2008-43589
Patent Document 2: Japanese Patent Application Publication No. 2005-149315

### SUMMARY OF INVENTION

### TECHNICAL PROBLEM

A user may watch a video played on a screen placed at a position farther than a user object from a point of view of a virtual camera. In such a case, visibility may deteriorate because another object, such as the screen, is hidden behind the user object. If the user object is undisplayed, there is a problem that movement operability deteriorates because it is hard to know a movement direction of the user object when the user object moves or the like.

An object of the present disclosure is to reduce deterioration of visibility while preserving movement operability in a virtual space.

### SOLUTION TO PROBLEM

According to an aspect of an embodiment illustrated in the present disclosure, there is provided a storage medium having stored thereon a program which, when executed by a computer including a processor and a memory, causes the processor to perform operations comprising:
generating a virtual space;
placing a virtual camera and a user object in the virtual space;
generating, based on the virtual camera, a virtual space image obtained by capturing an inside of the virtual space from the virtual camera; and
moving, based on a movement operation for moving the user object being performed, the user object in the virtual space,
wherein, in the generating the virtual space image,
when the movement operation is not performed the user object is set as transparent and when the movement operation is performed the user object is set as opaque.

### ADVANTAGEOUS EFFECTS OF INVENTION

According to an aspect of an embodiment illustrated in the present disclosure, the present invention makes it possible to reduce deterioration of visibility while preserving movement operability in a virtual space.

### BRIEF DESCRIPTION OF THE DRAWINGS

Fig. 1 is a diagram illustrating an example configuration of a system according to an embodiment.
Fig. 2 is a block diagram illustrating a functional configuration of a user terminal according to an embodiment.
Fig. 3 is a block diagram illustrating a functional configuration of a server according to an embodiment.
Fig. 4 illustrates an example of a virtual space image displayed on the user terminal when a program according to a comparative example is executed.
Fig. 5 is a flowchart illustrating an example of a process related to provision of a virtual space according to an embodiment.
Fig. 6 is a schematic diagram illustrating an example of the virtual space according to an embodiment.
Fig. 7 is a schematic diagram illustrating an example of a display screen according to an embodiment.
Fig. 8 is a schematic diagram illustrating an example of a display screen according to Variation 1 of an embodiment.

### DESCRIPTION OF EXEMPLARY EMBODIMENTS

Hereinafter, embodiments of this technical idea will be described in detail with reference to the drawings. In the following description, the same components or the like are denoted by the same reference numerals. The names and functions thereof are the same.

Therefore, detailed descriptions thereof will not be repeated. In one or more embodiments shown in the present disclosure, the elements included in the embodiments can be combined with each other, and the combined result also forms a part of the embodiments shown in the present disclosure.

### (Configuration of System)

Hereinafter, as an embodiment according to the present disclosure, a system which moves a user object in a virtual space based on an operation input of a user and provides the user with a virtual space image generated based on a virtual camera which moves in accordance with a movement of the user object will be described as an example.

The virtual space may be common to a plurality of users or may be different for each of the plurality of users. In other words, a plurality of user objects may exist in one virtual space or one user object may exist in one virtual space. The virtual space may be generated by using an XR technology such as virtual reality or VR, augmented reality or AR, mixed reality or MR, and substitutional reality or SR.

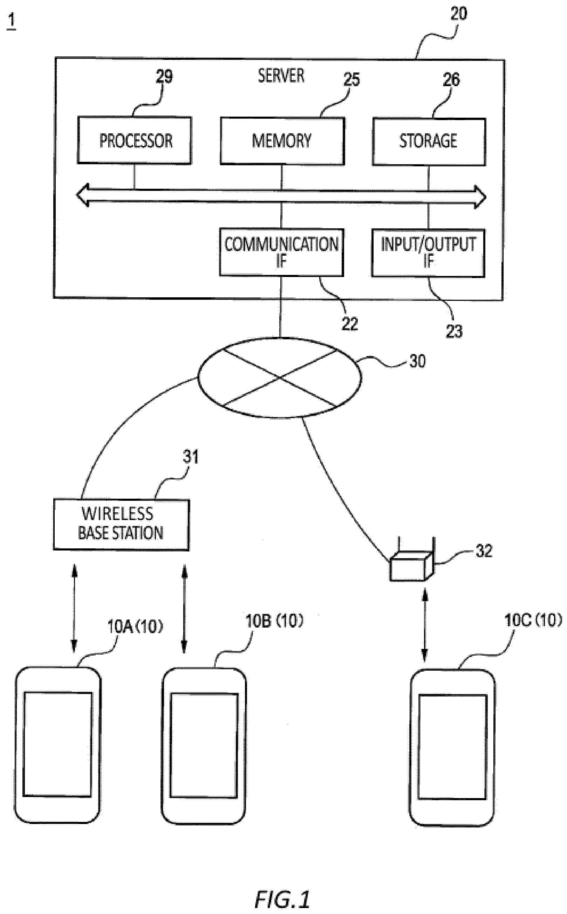

Fig. 1 is a diagram illustrating an example configuration of a system 1 according to an embodiment. As illustrated in Fig. 1, the system 1 includes user terminals 10A, 10B, and 10C respectively used by the plurality of users, and a server 20, and these devices are connected to be able to communicate with each other over a network 30.

The user terminal 10A and the user terminal 10B connect to the network 30 by communicating with a wireless base station 31. The user terminal 10C connects to the network 30 by communicating with a wireless router 32 installed in a facility such as a house. Hereinafter, user terminals such as the user terminals 10A, 10B, and 10C may be collectively referred to as a "user terminal 10". The user terminal 10 may be configured to connect to the network 30 by wired communication.

The user terminal 10 is a computer, or an information processing apparatus, used by the user. The user terminal 10 may be a portable information terminal or may be a stationary information terminal such as a personal computer, or PC, or a gaming console. The user terminal 10 may or may not include a touch screen. The user terminal 10 may be a head-mounted device, or HMD, including AR goggles and AR glasses. In the description below, the user terminal 10 is a portable terminal including a touch screen and is specifically a smartphone, a phablet, a tablet, or the like.

For example, the user terminal 10 executes an application program installed via a platform for distributing applications or the like. The user terminal 10 may execute a program acquired via a website browsing software, or a web browser, instead of executing the application program.

By executing a program such as the application program, the user terminal 10 can generate a virtual space image and output the virtual space image to a display unit. The user terminal 10 may transmit and receive various types of data to and from the server 20, as required, for generating the virtual space image.

The server 20 transmits as needed, to the user terminal 10, data required for generating the virtual space image. The server 20 manages various types of data related to the user. For example, the server 20 receives information related to the operation input of the user from the user terminal 10 and executes a process according to the received information.

The server 20 includes, as a hardware configuration, a communication interface or IF 22, an input/output IF 23, a memory 25, a storage 26, and a processor 29, which are connected to each other via a communication bus.

The communication IF 22 is compatible with various types of communication standards such as a local area network or LAN standard for example and functions as an interface for transmitting and receiving data to and from an external communication device such as the user terminal 10.

The input/output IF 23 receives an input of information to the server 20 and functions as an interface for outputting the information to an outside of the server 20. The input/output IF 23 includes an input receiving unit for receiving a connection of an information input device such as a mouse, a keyboard, or the like and an output unit for receiving a connection of an information output device such as a display for displaying an image or the like.

The memory 25 is a storage device for storing data or the like used for a process in the server 20. For example, the memory 25 provides the processor 29 with a work area to be used temporarily when the processor 29 executes a process. The memory 25 includes a storage device such as a read-only memory or ROM, a random access memory or RAM, or the like.

The storage 26 is a storage device for storing various types of programs and data to be read and executed by the processor 29. The storage 26 includes a storage device such as a hard disk drive or HDD, a flash memory, or the like.

The processor 29 controls an operation of the server 20 by reading and executing the program stored in the storage 26. For example, the processor 29 includes a central processing unit or CPU, a micro processing unit or MPU, a graphics processing unit or GPU, or the like.

### (Configuration of User Terminal)

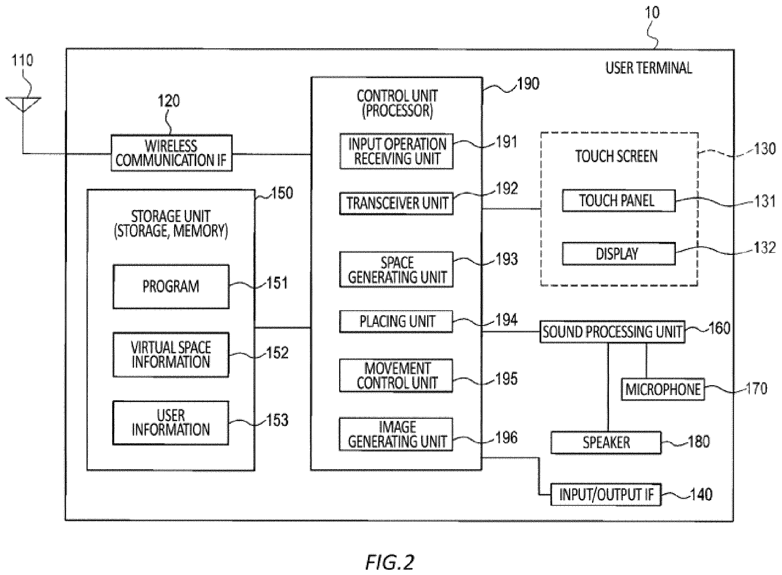

Fig. 2 is a block diagram illustrating a functional configuration of the user terminal 10. As illustrated in Fig. 2, the user terminal 10 includes an antenna 110, a wireless communication IF 120, a touch screen 130, an input/output IF 140, a storage unit 150, an audio processing unit 160, a microphone 170, a speaker 180, and a control unit 190.

The antenna 110 radiates, as a radio wave, a signal emitted from the user terminal 10 into space. The antenna 110 receives a radio wave from the space and forwards a received signal to the wireless communication IF 120.

The wireless communication IF 120 executes a modulation and demodulation process or the like for transmitting and receiving signals via the antenna 110 or the like in order for the user terminal 10 to communicate with another communication device. The wireless communication IF 120 is a communication module for wireless communication including a tuner, a high-frequency circuit, or the like, which provides modulation and demodulation and frequency conversion of a radio signal transmitted from or received at the user terminal 10 and forwards the received signal to the control unit 190.

The touch screen 130 receives an input from the user and outputs information for the user on a display 132. The touch screen 130 includes a touch panel 131 for receiving an input operation of the user and the display 132 for displaying a menu panel, a virtual space image, or the like on the screen. The touch panel 131 may detect an approach of the user's finger or the like by using, for example, a capacitive method. For example, the display 132 is implemented by a liquid crystal display or LCD, an organic electroluminescence or EL, or any other display device.

The input/output IF 140 functions as an interface for receiving an input of information to the user terminal 10 and outputting the information to an outside of the user terminal 10.

The storage unit 150 is comprised of a flash memory, a RAM, or the like. The storage unit 150 may store various types of data received by the user terminal 10 from the server 20. The storage unit 150 stores a program 151 which may provide a virtual space image to the user, virtual space information 152, and user information 153.

The virtual space information 152 includes, for example, information for generating a virtual space. For example, virtual space information 152 includes information for generating various types of virtual objects such as a virtual camera, a user object, or the like to be placed in the virtual space. In addition, the virtual space information 152 includes, for example, placement information for placing various types of virtual objects in the virtual space. For example, the user information 153 includes terminal identification or ID for identifying the user terminal 10, user ID information for identifying a user, or the like.

The audio processing unit 160 modulates and demodulates an audio signal. The audio processing unit 160 modulates the signal forwarded from the microphone 170 and forwards the modulated signal to the control unit 190. In addition, the audio processing unit 160 forwards the audio signal to the speaker 180. The audio processing unit 160 is implemented by, for example, a processor for audio processing. The microphone 170 functions as an audio input unit for receiving the input of the audio signal and outputting the audio signal to the control unit 190. The speaker 180 functions as an audio output unit for outputting the audio signal to the outside of the user terminal 10.

The control unit 190 controls an operation of the user terminal 10 by reading and executing the program stored in the storage unit 150. The control unit 190 is implemented by, for example, an application processor.

The control unit 190 performs each function of an input operation receiving unit 191, a transceiver unit 192, a space generating unit 193, a placement unit 194, a movement control unit 195, and an image generating unit 196 by reading and executing the program 151. In one aspect, the control unit 190 generates a virtual space image while transmitting and receiving various types of information to and from the server 20.

The input operation receiving unit 191 receives an input operation of the user based on an output from the touch screen 130. Specifically, the input operation receiving unit 191 detects the approach of the user's finger or the like to the touch panel 131 as coordinates of a coordinate system including a horizontal axis and a vertical axis of a plane constituting the touch screen 130.

The input operation receiving unit 191 identifies an operation of the user on the touch screen 130. Specifically, the input operation receiving unit 191 identifies operations of the user such as so-called "approach operation", "release operation", "tap operation", "double tap operation", "long press operation (long touch operation)", "drag operation (swipe operation)", "move operation", and "flick operation". The operations of the user identified by the input operation receiving unit 191 are not limited to the above. For example, when the touch panel 131 has a mechanism capable of detecting a magnitude of a pressure applied by the user on the touch panel 131, the input operation receiving unit 191 identifies the magnitude of the pressure applied by the user.

The transceiver unit 192 receives various types of information from the server 20 and transmits various types of information to the server 20. The transceiver unit 192 receives, for example, at least a part of virtual space information 252 from the server 20. As an example, the transceiver unit 192 receives, from the server 20, another-user object information related to another-user object operated by another user. The transceiver unit 192 transmits, for example, information related to a movement and any other action of the user object to the server 20.

The space generating unit 193 generates a virtual space with reference to the virtual space information 152. In addition, the space generating unit 193 generates a virtual object such as a virtual camera and a user object to be placed in the virtual space. The virtual object generated by the space generating unit 193 may include another-user object operated by another user, a screen object for displaying a video, or the like.

The placement unit 194 places various types of virtual objects such as the virtual camera, the user object, or the like in the virtual space with reference to the placement information included in the virtual space information 152. For example, the placement unit 194 places the another-user object in the virtual space based on the another-user object information. The placement unit 194 may move the another-user object and any other virtual object based on information transmitted from the server 20 or the like.

The movement control unit 195 moves the user object in the virtual space based on a movement operation for moving the user object, which may be hereinafter simply referred to as a "movement operation", being performed. For example, the movement control unit 195 interprets a content of an instruction from the user based on a coordinate of an input position of an input operation and a type of the operation received by the input operation receiving unit 191 and moves the user object based on the interpretation.

The image generating unit 196 generates, based on the virtual camera, a virtual space image obtained by capturing an inside of the virtual space from the virtual camera. The virtual space image generated by the image generating unit 196 is output to the touch screen 130 and displayed on the display 132.

When no movement operation is performed, in other words, when the user object is in a stopped state, the image generating unit 196 sets the user object as transparent in generating the virtual space image. When a movement operation is performed, in other words, when the user object is in a moving state, the image generating unit 196 sets the user object as opaque in generating the virtual space image.

When changing the user object in the virtual space image from opaque to transparent, it is preferable that the image generating unit 196 gradually raises a level of transparency of the user object. In other words, when the user object transitions from the moving state to the stopped state, the image generating unit 196 may execute a fade-out process so that the user object gradually changes from opaque to transparent. For example, a duration of the fade-out process is about 0.1 seconds to two seconds.

When changing the user object in the virtual space image from transparent to opaque, it is preferable that the image generating unit 196 gradually lowers the level of transparency of the user object. In other words, when the user object transitions from the stopped state to the moving state, the image generating unit 196 may execute a fade-in process so that the user object gradually changes from transparent to opaque. For example, a duration of the fade-in process is about 0.1 seconds to two seconds.

The image generating unit 196 preferably generates the virtual space image so that the user object performs a collateral action accompanying the movement of the user object during a first period after a start of the movement operation. The image generating unit 196 preferably generates the virtual space image so that the user object performs a collateral action accompanying a stop of the user object during a second period after an end of the movement operation. Lengths of the first period and the second period may be the same or may be different. The image generating unit 196 may change at least one of the lengths of the first period or the second period in accordance with a type of the collateral action performed by the user object.

The collateral action includes a change in a posture of the user object. For example, the preparation action, which is a collateral action accompanying a movement of the user object, includes an action normally performed by a human when the human starts to move such as an action of leaning an upper body of the user object, an action of bending arms, and an action of bending knees before jumping. For example, a lingering action, which is a collateral action accompanying a stop of the user object, includes an action normally performed by a human when the human stops moving such as an action of straightening the leaning upper body, an action of stretching arms, and an action of stretching knees.

When the user object performs the action of leaning the upper body as the preparation action and performs the action of straightening the upper body as the lingering action, the change in motion of the user object is easy to recognize, so that a difference in action between the stopped state and the moving state can be effectively complemented. Thus, it is preferable that the action of leaning the upper body is performed as the preparation action and the action of straightening the upper body is performed as the lingering action.

The image generating unit 196 preferably keeps the distance between the virtual camera and the user object constant before and after the start of the movement operation and before and after the end of the movement operation. The term "constant" includes minor errors.

### (Configuration of Server)

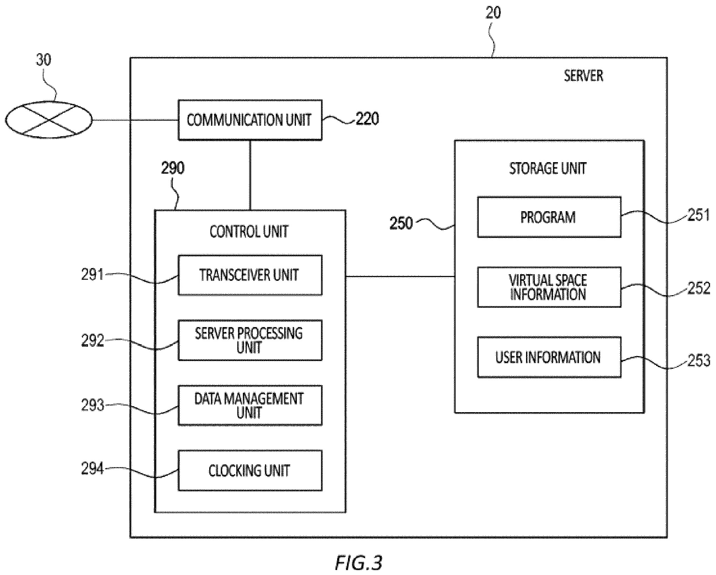

Fig. 3 is a block diagram illustrating a functional configuration of the server 20. A configuration of the server 20 will be described in detail with reference to Fig. 3. The server 20 performs functions of a communication unit 220, a storage unit 250, and a control unit 290 by operating in accordance with a program 251.

The communication unit 220 functions as an interface for the server 20 to communicate with an external communication device such as the user terminal 10 via the network 30.

The storage unit 250 stores various types of programs and data for operating the server 20. In one aspect, the storage unit 250 stores the program 251, the virtual space information 252, and user information 253.

The program 251 is a program for providing the user with the virtual space image via the user terminal 10. For example, the program 251 executes various types of processes on a side of the server 20 for providing the user with the virtual space image with reference to the virtual space information 252, the user information 253, or the like.

For example, the virtual space information 252 includes information for generating the virtual space and information for generating various types of virtual objects to be placed in the virtual space. At least a part of the virtual space information 252 is information which the virtual space information 152 is based on. The virtual space information 252 may include information related to a position in the virtual space and an action of each user object. In addition, the virtual space information 252 may include information related to a video.

The user information 253 is information related to a user of each user terminal 10. For example, the user information 253 includes information for identifying the user terminal 10 or the user of the user terminal 10 and any other information.

The control unit 290 performs functions of a transceiver unit 291, a server processing unit 292, a data management unit 293, and a clocking unit 294 by executing the program 251 stored in the storage unit 250.

The transceiver unit 291 receives various types of information from the user terminal 10 and transmits various types of information to the user terminal 10. For example, the user terminal 10 and the server 20 transmit and receive information related to generation of the virtual space and the virtual object, information related to a movement and any other action of the user object, information related to playing of a video, or the like.

The server processing unit 292 executes various types of processes required in the server 20 for providing the user with the virtual space via the user terminal 10. The server processing unit 292 instructs the transceiver unit 291 to transmit various types of data in response to various types of requests from the user terminal 10 received by the transceiver unit 291. In addition, the server processing unit 292 instructs the data management unit 293 to update various types of data based on various types of calculation results by the server processing unit 292.

Based on an instruction from the server processing unit 292, the data management unit 293 executes processes for adding, deleting, or updating various types of data stored in the storage unit 250. The clocking unit 294 executes a process of measuring time. In addition, the clocking unit 294 executes, for example, a process of synchronizing various types of information related to time in a plurality of user terminals 10.

### (Comparative Example)

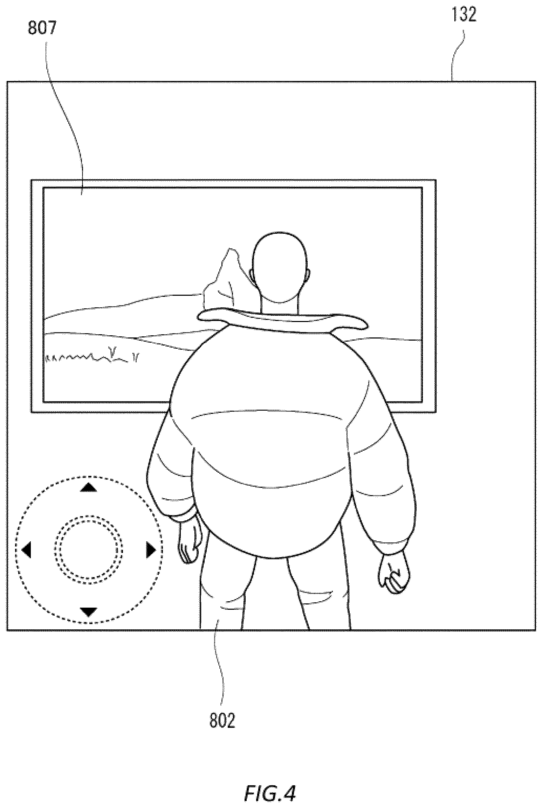

Next, the virtual space image generated by executing the program according to a comparative example will be described with reference to Fig. 4. Fig. 4 illustrates an example of the virtual space image displayed on the display 132 of the user terminal 10 by executing the program according to the comparative example.

Assume that the control unit 190 in the user terminal 10 generates the virtual space image by executing the program according to the comparative example. Then, the control unit 190 sets the user object 802 as opaque regardless to whether the movement operation of the user is performed. In other words, the control unit 190 sets the user object 802 as opaque in the virtual space image not only when the user object 802 is in the moving state but also when the user object 802 is in the stopped state.

Assume here that the screen object 807, which is an example of the virtual object, is placed in the virtual space. The control unit 190 starts to play a video on the screen object 807 when the user object 802 enters a trigger region defined in a vicinity of the screen object 807. When the user object 802 is in the stopped state within the trigger region, the playing of the video on the screen object 807 continues.

A manner of playing the video may be a streaming manner in which video information is acquired from the server 20 each time or may be a downloading manner in which the video information is downloaded in the storage unit 150 in advance. The video may preferably be played with an audio output.

In this way, while the video is played on the screen object 807, when the user object 802 is opaque as described above, the user may not be able to watch a part of the video because a part of the screen object 807 is hidden behind the user object 802. The program according to present disclosure solves such a problem by the operation as described below.

### (Example Operation of Program)

### (a) Flow of Operation

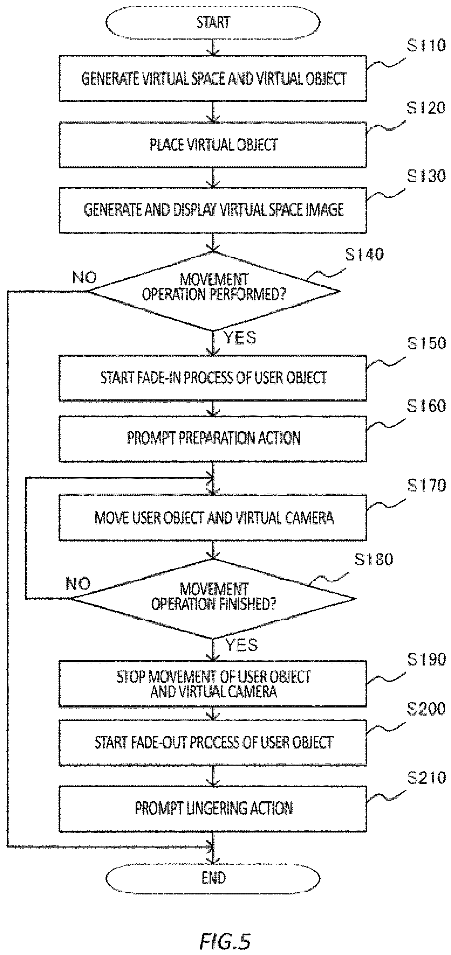

Next, an example operation in a program according to an embodiment of the present disclosure will be described with reference to Figs. 5 to 7. Each process described below is implemented by executing the program 151 by the control unit 190 in the user terminal 10 and executing the program 251 by the control unit 290 in the server 20.

Each process comprised in each flowchart described in the present specification may be executed in any order that would bring no conflict or inconsistency in a content of the process and may be executed in parallel. Moreover, a part of the processes comprised in each flowchart described in the present specification may be omitted.

Fig. 5 is a flowchart illustrating an example of a process related to provision of a virtual space according to an embodiment. First, at step S110, the control unit 190 generates a virtual space with reference to the virtual space information 152. Similarly, the control unit 190 generates a virtual object including the virtual camera and the user object. The control unit 190 may receive various types of information such as the virtual space information 252 from the server 20 as required in generating the virtual space and the virtual object.

At step S120, the control unit 190 places the virtual object in the virtual space with reference to the placement information included in the virtual space information 152. The control unit 190 places the virtual camera at a position at a predetermined distance from the user object.

At step S130, the control unit 190 generates a virtual space image. The control unit 190 then sets the user object as transparent. The control unit 190 displays a generated virtual space image on the display 132.

The virtual space image is based on the virtual camera and is obtained by capturing an inside of the virtual space from the virtual camera. A viewing direction of the virtual camera may be changed based on an input operation for changing an orientation of the virtual camera being performed by the user. For example, the virtual camera may be moved to a position according to the input operation by the user while keeping the distance from the user object.

The control unit 190 continues to display the user object as transparent when no movement operation of the user object is detected, i.e. NO at step S140. The control unit 190 then ends the series of processes in response to a reception of an input operation for ending the program 151 or the like.

When a movement operation of the user object is detected, i.e. YES at step S140, the control unit 190 starts a fade-in process for gradually changing the user object to opaque at step S150. When the movement operation by the user is detected, the control unit 190 transmits as required, to the server 20, information for determining a position of the user object after the movement.

At step S160, the control unit 190 controls the user object to perform a preparation action accompanying the movement of the user object.

At step S170, the control unit 190 executes a process for moving the user object. The control unit 190 executes a process for moving the virtual camera at a same velocity as the user object so that the virtual camera moves in conjunction with the movement of the user object. Thus, the user object and the virtual camera move while keeping a positional relationship with each other.

When no end of the movement operation of the user object is detected, i.e. NO at step S180, the control unit 190 returns to step S170 and continues the process for moving the user object and the virtual camera.

When an end of the movement operation of the user object is detected, i.e. YES at step S180, the control unit 190 executes a process for stopping the movement of the user object and the virtual camera at step S190.

At step S200, the control unit 190 starts a fade-out process for gradually changing the user object to transparent.

At step S210, the control unit 190 controls the user object to perform the lingering action accompanying the stop of the user object. The control unit 190 then ends the series of processes in response to a reception of the input operation for ending the program 151 or the like.

### (b) Description of Virtual Space and Virtual Space Image

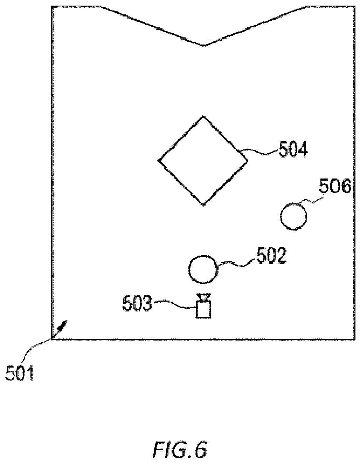

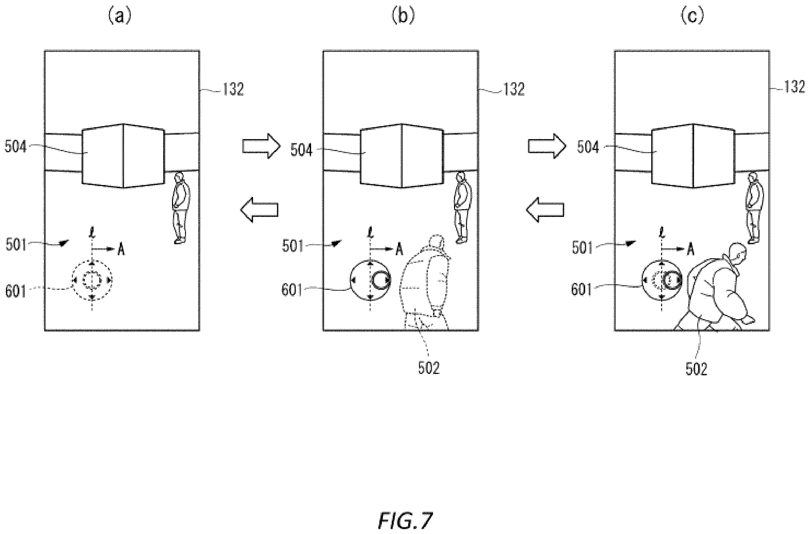

Hereinafter, the virtual space and the virtual space image generated by the series of processes illustrated in Fig. 5 will be described with reference to Figs. 6 and Fig. 7. Fig. 6 is a schematic diagram illustrating an example of the virtual space 501 according to an embodiment. In Fig. 6, the user object 502, the virtual camera 503, the column object 504, and the another-user object 506 are placed in the virtual space 501.

The user object 502 is an object operable by the user, such as an avatar of the user. The another-user object 506 is an object operable by another user, such as an avatar of the another user. The virtual camera 503 is a virtual object which captures the virtual space 501. The column object 504 is a virtual object fixedly placed in the virtual space 501.

### (b-1) Virtual Space Image when Transitioning from Stopped State to Moving State

Fig. 7 is a schematic diagram illustrating an example of a display screen according to an embodiment. Specifically, (a) of Fig. 7 illustrates the display screen when the user object 502 is in the stopped state, (b) of Fig. 7 illustrates the display screen when the user object 502 is performing the collateral action. (c) of Fig. 7 illustrates the display screen when the user object 502 is in the moving state.

(a) of the Fig. 7 illustrates a virtual space image displayed in a state before the movement operation of the user object 502 is performed, i.e. at step S130 illustrated in Fig. 5. The user object 502 in the stopped state is transparent and not displayed in the virtual space image. When the user object 502 has some belongings, the belongings are also not displayed.

The another-user object 506 is displayed on the display 132 of the user operating the user object 502 regardless of whether the another-user object 506 is in the moving state. For example, in (a) of Fig. 7, the another-user object 506 is standing still and not moving but is displayed on the display 132.

The another-user object 506 is transparent and not displayed on the display of another user operating the another-user object 506. The user object 502 is opaque and displayed on the display of the another user.

When the another user performs an operation for controlling the another-user object 506 to make a move or any other action, a position of the another-user object 506 after the movement or information for determining the any other action is transmitted to the user terminal 10 of the user of the user object 502 via the server 20. The control unit 190 controls the position and the action of the another-user object 506 in the virtual space 501 based on the information.

In addition, in (a) of Fig. 7, an operator 601 is indicated by a dashed line. The operator 601 is a virtual controller displayed to receive the input of the movement operation for moving the user object 502. For example, by dragging a circular portion at a center of the operator 601 in a direction, the user can move the user object 502 in the direction of dragging.

The operator 601 is an example and any other shape or input manner may be employed. In order to improve the visibility of the virtual space 501, it is preferable that the operator 601 is completely transparent or is visible with a high level of transparency until the movement operation of the user is received.

(b) of Fig. 7 illustrates a virtual space image in a state in which the movement operation of the user object 502 is started and the fade-in process of the user object 502, i.e. step S150 illustrated in Fig. 5, and the preparation action, i.e. step S160 illustrated in Fig. 5, are being performed. In this virtual space image, the user object 502 is displayed in a semi-transparent state, (b) of Fig. 7 illustrates the user object 502 in a dashed line in order to illustrate that the user object 502 is displayed in the semi-transparent state. For example, when the circular portion is dragged into a region positioned on a right-hand side of the line segment 1 laterally dividing the operator 601 into two halves, i.e. on a side in a direction indicated by an arrow A, the user object 502 performs a preparation action for a movement to the right during the first period after a start of the drag operation.

Specifically, the user object 502 leans an upper body while orienting its body to the right-hand side. The user object 502 may further perform another preparation action such as bending of knees and arms.

In (b) of Fig. 7, the circular portion of the operator 601 is positioned on the right-hand side in order to illustrate that a movement operation to the right is being performed. The operator 601 has a lower level of transparency than in (a) of Fig. 7 because the movement operation is being performed.

(c) of Fig. 7 illustrates a virtual space image, after the fade-in process and the preparation action of the user object 502 are completed, while the movement operation of the user object 502 continues, i.e. step S170 illustrated in Fig. 5. In this virtual space image, the user object 502 is displayed in an opaque state, (c) of Fig. 7 illustrates the user object 502 in a solid line in order to illustrate that the user object 502 is displayed in the opaque state. In (c) of Fig. 7, the user object 502 is moving to the right because the movement operation to the right is being performed.

In (c) of Fig. 7, as in (b) of Fig. 7, the circular portion of the operator 601 is positioned on the right-hand side in order to illustrate that a movement operation to the right is being performed. In (c) of Fig. 7, as in (b) of Fig. 7, the operator 601 has a lower level of transparency than in (a) of Fig. 7, because the movement operation is being performed. During the movement operation, the operator 601 may be opaque in order to facilitate the movement operation of the user or may be semi-transparent or transparent in order to improve the visibility of the virtual space 501.

During the transition period from the stopped state to the moving state of the user object 502, firstly the virtual space image illustrated in (a) of Fig. 7, then the virtual space image illustrated in (b) of Fig. 7, and finally the virtual space image illustrated in (c) of Fig. 7 are displayed. While Fig. 7 only illustrates (b) of Fig. 7 as the display screen when the user object 502 is performing the collateral action, the control unit 190 generates the virtual space image so that a motion of the collateral action of the user object 502 changes continuously or gradually.

During this transition period, the fade-in process of the user object 502 continuously or gradually lowers the level of transparency of the user object 502. In other words, the fade-in process of the user object 502 and the preparation action for moving the user object 502 are executed in parallel.

A length of the first period during which the user object 502 performs the preparation action may be the same as the transition period or may be shorter than the transition period. For example, when the first period is shorter than the transition period, the preparation action and the movement of the user object 502 start with a start of the fade-in process and then the preparation action completes while the fade-in process continues. For example, when the first period is longer than the transition period, the preparation action and the movement of the user object 502 start with the start of the fade-in process and then the preparation action continues after the fade-in process completes.

### (b-2) Virtual Space Image when Transitioning from Moving State to Stopped State

During the transition period from the moving state to the stopped state of the user object 502, firstly the virtual space image illustrated in (c) of Fig. 7, then the virtual space image illustrated in (b) of Fig. 7, and finally the virtual space image illustrated in (a) of Fig. 7 are displayed.

As illustrated in (b) of Fig. 7, the user object 502 performs the lingering action until the stop after the end of the movement operation, in other words, during the second period after the end of the drag operation on the circular portion by the user. For example, the user object 502 straightens the leaning upper body and stamps its feet.

During this transition period, the fade-out process of the user object 502 continuously or gradually raises the level of transparency of the user object 502. In other words, the fade-out process of the user object 502 and the lingering action for stopping the user object 502 are executed in parallel.

A length of the second period during which the user object 502 performs the lingering action may be the same as the transition period or may be shorter than the transition period. For example, when the second period is shorter than the transition period, the lingering action of the user object 502 starts with a start of the fade-out process and then the lingering action completes while the fade-out process continues.

### (b-3) Performing Gesture of User Object in Stopped State

When the user performs an operation such as pressing an icon included in the display screen, the user object 502 may perform a gesture according to a content of the operation. The gesture includes an action of applauding, an action of waving a hand, or the like.

When the user object 502 is in the stopped state, in other words, is undisplayed, if the gesture is performed, the control unit 190 displays the user object 502. When the gesture of the user object 502 ends, the control unit 190 sets the user object 502 to be undisplayed again.

Such a configuration enables more types of action to be performed by the user object 502 and further enables the user operating the user object 502 to check the action of the user object 502 while the user object 502 is stopped.

### (b-4) Control of Action according to Velocity

The user object 502 may change its velocity in accordance with a distance the circular portion of the operator 601 is dragged. Specifically, assuming that a center position of the circular portion of the operator 601 when no movement operation is performed is an initial position, the user object 502 moves by walking when a distance between the center position of the circular portion that has been dragged and the initial position is larger than zero and smaller than a predetermined value. The user object 502 moves by running when the distance between the center position of the circular portion that has been dragged and the initial position is larger than the predetermined value. Hereinafter, a state in which the user object 502 is walking is referred to as a walking state and a state in which the user object 502 is running is referred to as a running state.

When the user object 502 transitions from the walking state to the running state, the control unit 190 may control the user object 502 to perform a collateral action such as an action of leaning of the upper body of the user object 502 at a larger angle. When the user object 502 transitions from the running state to the walking state, the control unit 190 may control the user object 502 to perform a collateral action such as an action of leaning of the upper body of the user object 502 at a smaller angle.

In such a case, if the orientation of the user object 502 and the viewing direction of the virtual camera 503 are aligned as described below, when an angle of leaning of the upper body of the user object 502 becomes larger as the velocity of the user object 502 increases, a head of the user object 502 moves away from the virtual camera 503. Thus, the user watching the image captured by the virtual camera 503 feels as if the user object 502 is positioned at a larger distance from him/her as the velocity of the user object 502 increases.

When the angle of leaning of the upper body of the user object 502 becomes smaller as the velocity of the user object 502 decreases, the head of the user object 502 moves closer to the virtual camera 503. Thus, the user watching the image captured by the virtual camera 503 feels as if the user object 502 is positioned at a smaller distance from him/her as the velocity of the user object 502 decreases.

Although the angle of leaning of the upper body of the user object 502 becomes larger as the velocity of the user object 502 increases in this embodiment, the present invention is not limited thereto. For example, the angle of leaning of the upper body of the user object 502 is made larger for a predetermined time period after the user object 502 starts running and then the angle of leaning of the upper body is gradually made smaller after the predetermined time has elapsed. Even in such a case, the angle of leaning of the upper body in the running state after the above-described predetermined time has elapsed is desirably larger than the angle of leaning of the upper body in the walking state.

### (Variation 1)

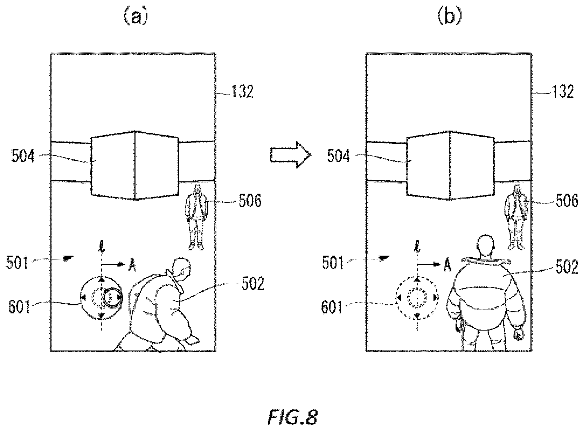

Fig. 8 is a schematic diagram illustrating an example of a display screen according to Variation 1 of an embodiment. Specifically, (a) of Fig. 8 illustrates the display screen when the user object 502 is in the moving state. (b) of Fig. 8 illustrates the display screen for describing the orientation of the user object 502 when the user object 502 is stopped moving.

In generating the virtual space image, when the user object 502 transitions from the moving state to the stopped state, the image generating unit 196 may control the user object 502 so as to align the orientation of the user object 502 and the viewing direction of the virtual camera 503.

Specifically, as illustrated in (a) of Fig. 8, assume that the user object 502 is moving to the right. When the movement operation ends in such a moving state, the image generating unit 196 changes the orientation of the user object 502 so that the virtual camera 503 is positioned on a back side of the user object 502, as illustrated in (b) of Fig. 8.

Not only when the movement operation to the right of the user object 502 ends, but also when the movement operation to another direction such as a direction in which the virtual camera 503 is positioned ends, the image generating unit 196 changes the orientation of the user object 502 so that the virtual camera 503 is positioned on the back side of the user object 502.

For example, after the orientation of the user object 502 and the viewing direction of the virtual camera 503 are aligned, the image generating unit 196 sets the user object 502 as transparent by executing the above-described fade-out process. The image generating unit 196 may execute the changing of the orientation of the user object 502 and the fade-out process of the user object 502 in parallel.

For example, during the transition period from the moving state to the stopped state of the user object 502, when controlling the user object 502 to perform the lingering action illustrated at step S210 illustrated in Fig. 5, the image generating unit 196 executes the changing of the orientation of the user object 502 and the process for controlling the user object 502 to perform the lingering action in parallel.

As described above, when the user object 502 transitions from the moving state to the stopped state, aligning the orientation of the user object 502 and the viewing direction of the virtual camera 503 can prevent unnatural situations such as a situation where the user object 502 communicates with another user object that should be invisible from the user object 502.

However, the user operating the user object 502 cannot check a facial expression of the user object 502. Therefore, when the user object 502 transitions from the moving state to the stopped state, the orientation of the user object 502 and the viewing direction of the virtual camera 503 may not be aligned.

For example, when the user object 502 transitions from the moving state to the stopped state, the orientation of the user object 502 and the viewing direction of the virtual camera 503 are aligned and further an image of a part or whole, including a face, of the user object 502 viewed from a front side of the user object 502 is displayed on the display screen.

### (Variation 2)

The image generating unit 196 may change a distance between the virtual camera 503 and the user object 502 before and after the start of the movement operation and before and after the end of the movement operation. For example, when the user object 502 starts to move as illustrated at step S170 in Fig. 5, the image generating unit 196 controls the user object 502 so as to move the user object 502 away from the virtual camera 503.

Specifically, the distance between the user object 502 and the virtual camera 503 when the user object 502 is stopped is a first distance. When the movement operation of the user object 502 starts, the image generating unit 196 moves the user object 502 so as to increase the distance between the user object 502 and the virtual camera 503 to a second distance which is longer than the first distance. The image generating unit 196 then moves the user object 502 and the virtual camera 503 at a same velocity so as to keep the second distance between the user object 502 and the virtual camera 503.

For example when the movement of the user object 502 is stopped as illustrated at step S190 in Fig. 5, the image generating unit 196 controls the user object 502 so as to move the user object 502 closer to the virtual camera 503. Specifically, when the movement operation of the user object 502 ends, the image generating unit 196 moves the user object 502 so as to change the distance between the user object 502 and the virtual camera 503 from the second distance to the first distance.

Such configuration enables the user to more easily feel as if the user object 502 is absorbed into him/herself because the user object 502 disappears from the display screen after the user object 502 comes closer to the user when the user object 502 transitions from the moving state to the stopped state. When the user object 502 transitions from the stopped state to the moving state, the user more easily feels as if the user object 502 comes out of him/her because the user object 502 moves away from the user.

The image generating unit 196 may move the virtual camera 503 instead of moving the user object 502 when changing the distance between the virtual camera 503 and the user object 502.

Instead of changing the distance between the virtual camera 503 and the user object 502 or in addition to changing the distance, a size of the user object 502 may be changed before and after the start of the movement operation and before and after the end of the movement operation.

For example, when the user object 502 transitions from the moving state to the stopped state, the image generating unit 196 may gradually enlarge a size of the user object 502 from a size of the user object 502 in the moving state, which may be simply referred to as a "size while moving" hereinafter, while executing the fade-out process of the user object 502. For example, when the user object 502 transitions from the stopped state to the moving state, the image generating unit 196 may gradually shrink the size of the user object 502 from a size larger than the size while moving to the size while moving, while executing the fade-in process of the user object 502.

Although each embodiment according to the present disclosure has been described in detail above, the control unit 290 may execute a part of the process executed by the control unit 190 in the description of each embodiment, or the control unit 190 may execute at least a part of the process executed by the control unit 290 as long as the operation of the program is not hindered.

For example, the program may implement a so-called cloud system in which the control unit 290 executes generation of the virtual space and the virtual object and also generation of the virtual space image. The program may be so-called stand-alone without the server 20. The program may be configured to enable a plurality of user objects to exist in the same virtual space by performing P2P communication between user terminals without the server 20.

Each of the above embodiments is merely an example for facilitating understanding of the present invention and is not intended to limit an interpretation of the present invention thereto. The present invention can be modified and improved without departing from the gist thereof, and it goes without saying that the present invention includes equivalents thereof.

### Appendix

The contents of the present disclosure are listed as follows.

### (Item 1)

A program which, when executed by a computer including a processor and a memory, causes the processor to perform operations comprising:
generating a virtual space;
placing a virtual camera and a user object in the virtual space;
generating, based on the virtual camera, a virtual space image obtained by capturing an inside of the virtual space from the virtual camera; and
moving, based on a movement operation for moving the user object being performed, the user object in the virtual space,
wherein, in the generating the virtual space image,
when the movement operation is not performed the user object is set as transparent and when the movement operation is performed the user object is set as opaque.

As a result of not displaying the user object when the user object is stopped, this can prevent another virtual object which the user wants to watch, such as a screen object, from being hidden behind the user object. Moreover, as a result of displaying the user object when the user object moves, motion sickness due to the movement of the user object can be prevented and also the movement direction of the user object in the virtual space can be easily known. Thus, deterioration of the visibility can be reduced while preserving movement operability in the virtual space.

(Item 2)

The program according to Claim 1, wherein, in the generating the virtual space image,
when changing the user object from opaque to transparent, a level of transparency of the user object is gradually raised, and
when changing the user object from transparent to opaque, the level of transparency of the user object is gradually lowered.

This can prevent the user object from looking unnatural while switching between a displayed state and an undisplayed state. Moreover, the virtual space can be more immersive because, when the user object stops moving, the user object is gradually changed to transparent so that the user feels as if the user object is absorbed into him/herself and, when the user object starts moving, the user object is gradually changed to opaque so that the user feels as if the user object comes out of him/her.

### (Item 3)

The program according to Claim 1 or Claim 2, wherein the program further causes the processor to perform operations comprising:
causing the user object to perform a collateral action accompanying a movement or a stop of the user object during at least one of a first period after a start of the movement operation or a second period after an end of the movement operation,
wherein the collateral action includes at least one of a preparation action while the user object transitions from a stopped state to a moving state or a lingering action while the user object transitions from the moving state to the stopped state.

Thus, the user object can be controlled to perform more natural actions.

### (Item 4)

The program according to Claim 3, wherein the collateral action includes a change in a posture of the user object.

In this way, as a result of controlling the user object to perform a conspicuous motion presenting a significant change as the collateral action, a difference in action between the stopped state and the moving state can be effectively complemented.

### (Item 5)

The program according to any one of Claims 1 to 4, wherein a distance between the virtual camera and the user object is kept constant before and after of a start of the movement operation and before and after an end of the movement operation.

This can prevent motion sickness even more effectively.

### (Item 6)

The program according to any one of Claims 1 to 4, wherein
when the user object transitions from a stopped state to a moving state, the user object is controlled so that the user object is moved away from the virtual camera, and
when the user object transitions from the moving state to the stopped state, the user object is controlled so that the user object is moved closer to the virtual camera.

Thus, when the user object transitions from the moving state to the stopped state, the user can more easily feel as if the user object is absorbed into him/herself because the user object disappears from the display screen after the user object comes closer to the user. Moreover, when the user object transitions from the stopped state to the moving state, the user can more easily feel as if the user object comes out of him/her, because the user object moves away from the user.

### (Item 7)

The program according to any one of Claims 1 to 6, wherein when the user object transitions from a moving state to a stopped state, the user object is controlled so that an orientation of the user object and a viewing direction of the virtual camera are aligned.

This can prevent mismatch between a region that is captured by the virtual camera, in other words, a region that is displayed to the user and a region that can be viewed by the user object, so that the user can feel as if he/she has the same sensation as the user object. Moreover, this can prevent unnatural situations such as a situation where the user object communicates with another-user object that should be invisible from the user object. Further, another user can know a direction visible for the user of the user object by checking a direction in which the user object is oriented.

### (Item 8)

A method performed by a computer including a processor and a memory, wherein the method comprises causing the processor to perform:
generating a virtual space;
placing a virtual camera and a user object in the virtual space;
generating, based on the virtual camera, a virtual space image obtained by capturing an inside of the virtual space from the virtual camera; and
moving, based on a movement operation for moving the user object being performed, the user object in the virtual space,
wherein, in the generating the virtual space image,
when the movement operation is not performed the user object is set as transparent and when the movement operation is performed the user object is set as opaque.

As a result of not displaying the user object when the user object is stopped, this can prevent another virtual object which the user wants to watch, such as a screen object, from being hidden behind the user object. Moreover, as a result of displaying the user object when the user object moves, motion sickness due to the movement of the user object can be prevented and also the movement direction of the user object in the virtual space can be easily known. Thus, deterioration of the visibility can be reduced while preserving movement operability in the virtual space.

### (Item 9)

An information processing apparatus comprising a processor and a memory, wherein the processor
generates a virtual space;
places a virtual camera and a user object in the virtual space;
generates, based on the virtual camera, a virtual space image obtained by capturing an inside of the virtual space from the virtual camera; and
moves, based on a movement operation for moving the user object being performed, the user object in the virtual space,
wherein, in generating the virtual space image,
when the movement operation is not performed the user object is set as transparent and when the movement operation is performed the user object is set as opaque.

As a result of not displaying the user object when the user object is stopped, this can prevent another virtual object which the user wants to watch, such as a screen object, from being hidden behind the user object. Moreover, as a result of displaying the user object when the user object moves, motion sickness due to the movement of the user object can be prevented and also the movement direction of the user object in the virtual space can be easily known. Thus, deterioration of the visibility can be reduced while preserving movement operability in the virtual space.

### EXPLANATION OF REFERENCES

1: system, 10: user terminal, 20: server, 30: network, 130: touch screen, 150: storage unit (of user terminal), 190: control unit (of user terminal), 250: storage unit (of server), 290: control unit (of server.

## Claims

1. A program which, when executed by a computer including a processor and a memory, causes the processor to perform operations comprising:
generating a virtual space;
placing a virtual camera and a user object in the virtual space;
generating, based on the virtual camera, a virtual space image obtained by capturing an inside of the virtual space from the virtual camera; and
moving, based on a movement operation for moving the user object being performed, the user object in the virtual space,
wherein, in the generating the virtual space image,
when the movement operation is not performed the user object is set as transparent and when the movement operation is performed the user object is set as opaque.

2. The program according to Claim 1, wherein, in the generating the virtual space image,
when changing the user object from opaque to transparent, a level of transparency of the user object is gradually raised, and
when changing the user object from transparent to opaque, the level of transparency of the user object is gradually lowered.

3. The program according to Claim 1 or Claim 2, wherein the program further causes the processor to perform operations comprising:
causing the user object to perform a collateral action accompanying a movement or a stop of the user object during at least one of a first period after a start of the movement operation or a second period after an end of the movement operation,
wherein the collateral action includes at least one of a preparation action while the user object transitions from a stopped state to a moving state or a lingering action while the user object transitions from the moving state to the stopped state.

4. The program according to Claim 3, wherein the collateral action includes a change in a posture of the user object.

5. The program according to any one of Claims 1 to 4, wherein a distance between the virtual camera and the user object is kept constant before and after of a start of the movement operation and before and after an end of the movement operation.

6. The program according to any one of Claims 1 to 4, wherein
when the user object transitions from a stopped state to a moving state, the user object is controlled so that the user object is moved away from the virtual camera, and
when the user object transitions from the moving state to the stopped state, the user object is controlled so that the user object is moved closer to the virtual camera.

7. The program according to any one of Claims 1 to 6, wherein when the user object transitions from a moving state to a stopped state, the user object is controlled so that an orientation of the user object and a viewing direction of the virtual camera are aligned.

8. A method performed by a computer including a processor and a memory, wherein the method comprises causing the processor to perform:
generating a virtual space;
placing a virtual camera and a user object in the virtual space;
generating, based on the virtual camera, a virtual space image obtained by capturing an inside of the virtual space from the virtual camera; and
moving, based on a movement operation for moving the user object being performed, the user object in the virtual space,
wherein, in the generating the virtual space image,
when the movement operation is not performed the user object is set as transparent and when the movement operation is performed the user object is set as opaque.

9. An information processing apparatus comprising a processor and a memory, wherein the processor
generates a virtual space;
places a virtual camera and a user object in the virtual space;
generates, based on the virtual camera, a virtual space image obtained by capturing an inside of the virtual space from the virtual camera; and
moves, based on a movement operation for moving the user object being performed, the user object in the virtual space,
wherein, in generating the virtual space image,
when the movement operation is not performed the user object is set as transparent and when the movement operation is performed the user object is set as opaque.
